(19) **Europäisches Patentamt** / **European Patent Office** / **Office européen des brevets**

(11) **EP 2 642 820 B1**

(12) # EUROPEAN PATENT SPECIFICATION

(45) Date of publication and mention of the grant of the patent:
**07.06.2017 Bulletin 2017/23**

(21) Application number: **10859757.6**

(22) Date of filing: **16.11.2010**

(51) Int Cl.:
***H05B 6/12*** *(2006.01)*

(86) International application number:
**PCT/JP2010/070320**

(87) International publication number:
**WO 2012/066623 (24.05.2012 Gazette 2012/21)**

(54) **INDUCTION-HEATING COOKING SYSTEM AND PROCESS FOR CONTROLLING AN INDUCTION-HEATING COOKING SYSTEM**

INDUKTIONSHEIZUNGS-KOCHSYSTEM UND VERFAHREN ZUM STEUERN EINES INDUKTIONSHEIZUNGS-KOCHSYSTEMS

SYSTÈME DE CUISSON À CHAUFFAGE PAR INDUCTION ET PROCÉDÉ POUR COMMANDER UN SYSTÈME DE CUISSON À CHAUFFAGE PAR INDUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.09.2013 Bulletin 2013/39**

(60) Divisional application:
**17164510.4**

(73) Proprietors:
- **Mitsubishi Electric Corporation**
  **Tokyo 100-8310 (JP)**
- **Mitsubishi Electric Home Appliance Co., Ltd.**
  **Fukaya-shi, Saitama 369-1295 (JP)**

(72) Inventors:
- **SHINDOI, Takashi**
  **Tokyo 100-8310 (JP)**
- **SHIKAI, Masahiro**
  **Tokyo 100-8310 (JP)**

- **SUMI, Kazuhiko**
  **Tokyo 100-8310 (JP)**
- **TAKESHITA, Miyuki**
  **Tokyo 100-8310 (JP)**
- **KINOSHITA, Hirokazu**
  **Fukaya-shi**
  **Saitama 369-1295 (JP)**
- **KAMEOKA, Kazuhiro**
  **Fukaya-shi**
  **Saitama 369-1295 (JP)**

(74) Representative: **Sajda, Wolf E. et al**
**Meissner Bolte Patentanwälte**
**Rechtsanwälte Partnerschaft mbB**
**Postfach 86 06 24**
**81633 München (DE)**

(56) References cited:
**EP-A1- 2 020 826          EP-A2- 0 460 279**
**WO-A1-2010/137498     JP-A- 2009 231 098**
**JP-A- 2009 231 235     US-A1- 2010 282 740**

**Description**

Technical Field

The present invention relates to an induction-heating cooking system which inductively heats a single heated-subject with a plurality of heating coils and a controlling process thereof.

Background Art

So far several induction-heating cooking systems have been proposed, for example, Patent Document 1 (JP 2009-238 575 A) and Patent Document 2 (JP 2009-238 613 A) disclose an induction-heating cooker including a plurality of small or compact heating coils arranged in a grid pattern and a plurality of sensors arranged corresponding to one of the heating coils for detecting the heated-subject such as a kettle or pan, which determines an area on a top plate occupied by the heated-subject based upon outputs from the sensors so that selected ones of the heating coils around the occupied area are driven.

US 2010/0282740 is further prior art disclosing a system according to the preamble of claim 1 and a process of the preamble of claim 4.

Summary of the Invention

Problems to be solved by the Invention

However the sensors used for the induction-heating cooker disclosed in Patent Documents 1 and 2 are, for example, optical sensors, each of which merely detects whether or not the pan stands over the corresponding heating coils (existence or non-existence of the pan), and thus the area occupied by the pan in a rough manner. Although selectively driving only the heating coils around the occupied area, those conventional induction-heating cookers cannot determine how the pan stands on the top plate of the induction-heating cooker (standing area of the pan).

Thus even where the pan is detected on the top plate by those sensors, the standing area of the pan over the corresponding heating coils may be negligible or limited. In this case, as those conventional induction-heating cookers of Patent Documents 1 and 2 drives each of the heating coils under the same driving condition, the pan bottom may be heated unevenly in accordance with the standing situation of the pan causing variation of surface temperature of the pan bottom (or electrical power applied to unit area from the heating coils), which may in turn, generates chars of food in the pan and/or partial bumping on the pan bottom.

Means for solving the problems

To address the above drawbacks, one embodiment of the present invention is to provide an induction-heating cooking system, which comprises:

a first heating coil;

at least one second heating coil arranged close to the first heating coil for heating a single heated-subject in cooperation with each other;

first and second drive circuitries supplying high-frequency current of the same frequency individually to the first and second heating coils;

a first n-th order component extractor (n: natural number) extracting an n-th order drive current component of the drive current through the first heating coil and an n-th order drive voltage component of the drive voltage across the first heating coil;

a second n-th order component extractor (n: natural number) extracting an n-th order drive current component of the drive current through the second heating coil and an n-th order drive voltage component of the drive voltage across the second heating coil; and

a controller is adapted to calculate load resistance of the first and second heating coils based upon the n-th order drive current components and the n-th order drive voltage components extracted by the first and second n-th order component extractors.

The controller of the present invention is adapted to control electric energy supplied from the first and second drive circuitries to the first and second heating coils in accordance with energy allocation ratios which depend upon the calculated load resistance ratio of the first and second heating coils.

Advantage of the Invention

According to the induction-heating cooking system of the present invention, the controller is adapted to instantly calculate a load resistance of a plurality of heating coils and control electric energy supplied to the first and second heating coils in accordance with energy allocation ratios which depend upon the calculated load resistance ratio of the first and second heating coils so as to heat the pan in an even or uniform manner, thereby preventing chars or burnt food in the pan.

Brief Description of the Drawings

Fig. 1          is a top plan view of the heating coil of Embodiment 1 according to the present invention.

Fig. 2          is a schematic basic circuit block diagram of an induction-heating cooking system according to the present invention.

Fig. 3          is a waveform of drive voltage detected by a drive voltage detector, and drive current detected by a drive current detector.

Figs. 4A-4C    are top plan views of disks made of various material which are set over a heating coil.

Figs. 5A-5B    are maps showing the relationship between resonance frequency and load resistance of disks made of various material set at different standing position.

Figs. 6A-6B    are maps showing the relationship between inductance and load resistance of disks made of various material set at different standing position.

Fig. 7          is a schematic circuit block diagram of an alternative induction-heating cooking system.

Fig. 8          is a schematic circuit block diagram of an induction-heating cooking system of Embodiment 1.

Fig. 9          is a top plan view of the heating coil of a Modification.

Fig. 10        is a top plan view of the heating coil of another Modification.

Denotation of Reference Numerals

1        = induction-heating cooking system
2        = heating coil
10      = commercial power source
12      = rectifying circuitry
14      = drive circuitry
20      = LCR induction-heater
24      = resonance capacitor
30      = drive voltage detector
32      = drive current detector
40      = primary-component extractor
50      = controller
P        = pan

Description of Embodiments

Referring to attached drawings, embodiments of an induction-heating cooking system according to the present invention will be described herein. Similar components are denoted with similar reference numerals throughout the description and drawings.

Embodiment 1.

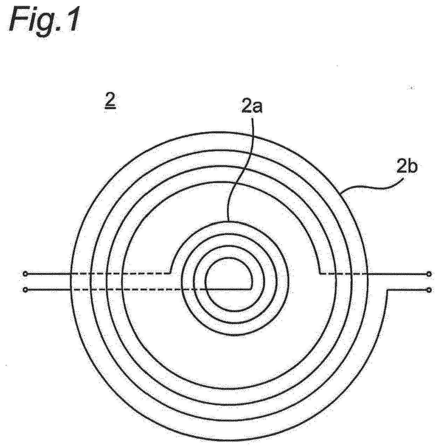

With reference to Figs. 1 to 10, Embodiment 1 of an induction-heating cooking system according to the present invention will be described herein in detail. Fig. 1 is a top plan view of the heating coil 2 of Embodiment 1. The heating coil 2 of Embodiment 1 includes an inner heating coil (a first heating coil) 2a formed by winding a conducting wire on a plane and an outer heating coil (a second heating coil) 2b formed by winding another conducting wire concentrically around the central coil 2a.

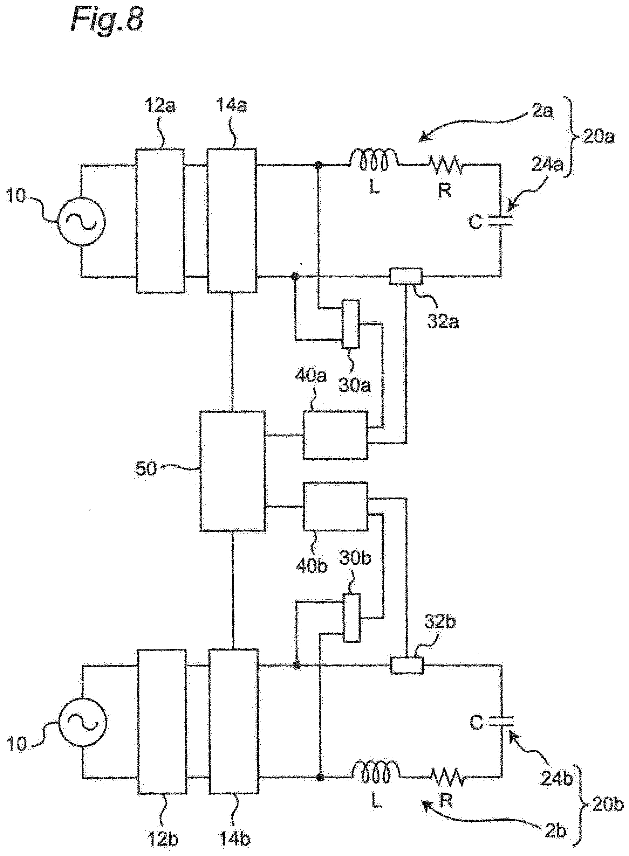

As will be described later in detail with reference to Fig. 8, the induction-heating cooking system 1 includes, in general, drive circuitries (first and second drive circuitries) 14a, 14b for driving the heating coil 2a, 2b, primary-component extractors (first and second primary-component extractors) 30a, 30b for extracting the primary components of the detected drive voltage and the detected drive current, and a controller 50 for controlling the drive circuitries 14a, 14b.

Prior to detailed description of the electrical structure and operation of Embodiment 1 of the induction-heating cooking system 1, firstly description will be made especially for the basic electrical structure of the primary-component extractor.

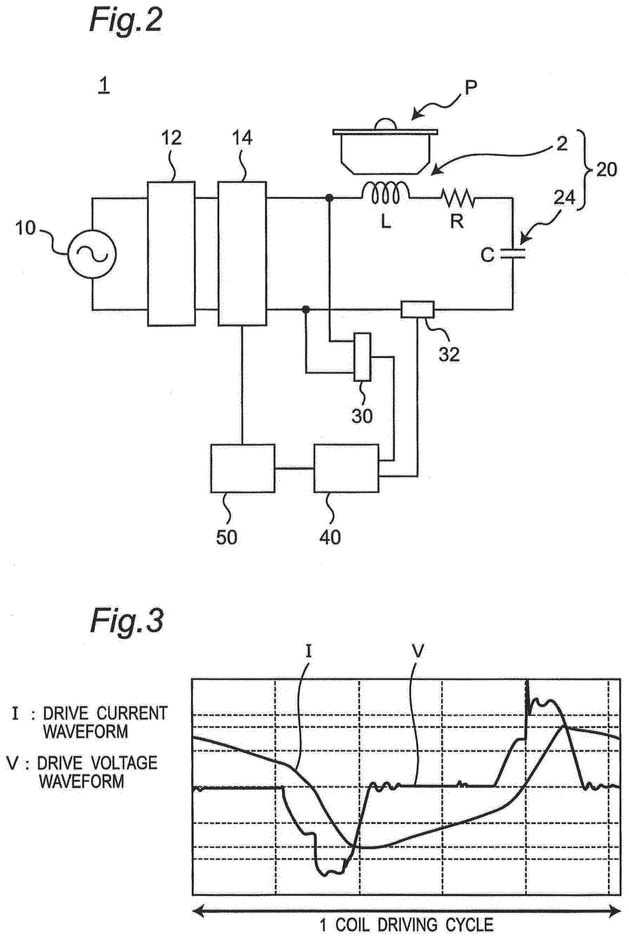

Fig. 2 is a schematic circuit block diagram of an induction-heating cooking system 1 having a single heating coil 2. With reference thereto, a basic principle of the induction-heating cooking system 1 according to the present invention will be explained in detail.

The induction-heating cooking system 1 includes, in general, a rectifying circuitry 12 adapted to rectify single-phase or three-phase alternate current of commercial power source 10 into direct current, a drive circuitry 14 adapted to a supply high-frequency current of a given drive frequency to a heating coil 2, an LCR induction-heater 20 composed of the heating coil 2 and a resonance capacitor 24 connected in series each other, a drive voltage detector 30 adapted to detect drive voltage across the LCR induction-heater 20, and a drive current detector 32 adapted to detect drive current through the LCR induction-heater 20.

More specifically, the rectifying circuitry 12 may be adapted for full-wave or half-wave rectification, and may include a filtering circuitry having an inductance for forming direct component and a capacitor (not shown). Also, the drive circuitry 14 may be composed of an inverter having a plurality of switching elements such as IGBTs (not shown), which may be any type of inverter, for example, a half-bridge inverter circuitry and a full-bridge inverter circuitry.

As explained above, the LCR induction-heater 20 is composed of the heating coil 2 and the resonance capacitor 24 connected in series each other, and the heating coil 2 is denoted in Fig. 2, as equivalent circuits of inductance $L$ and load resistance $R$. In this drawing, illustrated above the inductance $L$ is the heated-subject $P$ such as a pan.

When supplied with high-frequency current, the heating coil 2 generates alternate magnetic field which magnetically links with the heated-subject $P$ made of conductive material, and causes eddy current within the heated-subject $P$, thereby heating the heated-subject $P$ itself.

In general, the load resistance $R$ of the LCR induction-heater 20 varies in accordance with existence and/or standing situation (area and set position) of the heated-subject $P$, i.e., with alternate magnetic field which magnetically links with the heated-subject $P$. Thus, the load resistance $R$ of the LCR induction-heater 20 is equivalent to the wiring resistance $R_C$ of the heating coil 2 when no pan $P$ stands over the heating coil, in addition with an apparent resistance $R_L$ of the pan $P$ appeared when the pan $P$ is set over the heating coil (i.e., $R = R_C + R_L$).

It should be noted that any type of voltage detectors commonly known in the art may be used as the drive voltage detector 30 for detecting the drive voltage (output voltage) V across the LCR induction-heater 20. Also, any type of current detectors may be utilized as the drive current detector 32 for detecting the drive current (output current) I through the LCR induction-heater 20, such as a current transformer.

The induction-heating cooking system 1 of the present invention further includes a primary-component extractor 40 electrically connected with the drive voltage detector 30 and the drive current detector 32. As described above, while the drive circuitry 14 is an inverter having switching elements such as IGBTs (Insulated Gate Bipolar Transistors), each of the IGBTs of the drive circuitry 14 is driven by a control signal (gate signal) having a given drive frequency (30 kHz, for example), the drive voltage detector 30 and the drive current detector 32 detect the high-frequency modulated drive voltage $V$ and drive current $I$, as shown in Fig. 3, which contain a plurality of order components of the drive voltage $V$ and drive current $I$, respectively.

The high-frequency modulated drive voltage $V$ and drive current $I$ are generally expressed as a composite waveform containing multiple order components of drive voltage waveforms and drive current waveforms having higher order components of integral multiple of the drive frequency, respectively. The primary-component extractor 40 according to the present invention is adapted to extract only the primary components of the detected drive voltage $V$ and the detected drive current $I$, each of which has the same frequency as the drive frequency.

The primary-component extractor 40 is adapted to extract them, by sampling data of the drive voltage $V$ and the drive current $I$ at a sampling frequency equal to k-times (k is natural number of 2 or more) of the drive frequency, and performing a discrete Fourier transformation with the sampled data of the drive voltage $V$ and the drive current $I$.

Meanwhile, the primary-component extractor 40 is designed to process the primary components of the drive voltage **V** and the drive current **I** as expressed by a complex notation as follows:

$$V_1 = V_{1\,\mathrm{Re}} + j \times V_{1\,\mathrm{Im}}$$
$$I_1 = I_{1\,\mathrm{Re}} + j \times I_{1\,\mathrm{Im}} \qquad \ldots(1),$$

wherein $V_1$, $I_1$ denote the primary components of the drive voltage **V** and the drive current **I**; $V_{1Re}$, $I_{1Re}$ denote real parts of $V_1$, $I_1$; $V_{1Im}$, $I_{1Im}$ denote imaginary parts of $V_1$, $I_1$, respectively; and $j$ stands an imaginary unit.

The impedance **Z** of the LCR induction-heater 20 and the phase shift $\theta$ between the drive voltage $V_1$ and the drive current $I_1$ (the phase of the drive voltage $V_1$ over the drive current $I_1$, or the phase of the impedance **Z**) are expressed as follows:

$$Z = V_1 / I_1$$
$$\theta = \arctan\left(\mathrm{Im}(Z) / \mathrm{Re}(Z)\right) \qquad \ldots(2),$$

wherein Im(Z) and Re(Z) denote the real part and the imaginary part of the impedance **Z**, respectively. The phase shift $\theta$ between the drive voltage **V** and the drive current **I** may be expressed with the "arcsine" or the "arccosine" instead of the "arctangent", which may be more beneficial because the "arctangent" likely diverges and contains much calculation errors at the phase shift $\theta$ close to 90°.

The induction-heating cooking system 1 of the present invention further includes a controller 50 electrically connected both to the drive circuitry 14 and the primary-component extractor 40 as illustrated in Fig. 2. The controller 50 of the present invention is adapted to calculate the impedance **Z** of the LCR induction-heater 20 and the phase shift (argument) $\theta$ between the drive voltage $V_1$ and the drive current $I_1$ based upon the above Formula (2), and to apply a series of appropriate driving control signals (gate signals) to the drive circuitry 14 accordingly.

Furthermore, the controller 50 of the present invention is adapted to calculate the effective electric power $W_E$ and the effective current $I_E$ as follows:

$$W_E = \mathrm{Re}(V_1 \times I_1^*) / 2$$
$$I_E = \sqrt{I_1 \times I_1^*} / \sqrt{2} \qquad \ldots(3),$$

wherein $I_1^*$ is a complex conjugation of the drive current $I_1$.

As explained above, based upon the primary drive voltage $V_1$ and the primary drive current $I_1$, the controller 50 of the present invention is adapted to calculate the impedance **Z** of the LCR induction-heater 20, the phase shift (argument) $\theta$ between the primary drive voltage $V_1$ and the primary drive current $I_1$, the effective electric power $W_E$, and the effective current $I_E$.

On the other hand, in a typical LCR circuitry including the LCR induction-heater 20, parameters such as load resistance **R**, impedance **Z**, inductance **L**, and resonance frequency **Fr** of the heating coil 2 can be expressed as follows:

$$R = W_E / I_E^2$$
$$Z = R + j \times \left(\omega L - 1 / \omega C\right)$$
$$L = (R \tan\theta + 1 / \omega C) / \omega$$
$$Fr = 1 / 2\pi\sqrt{LC} \qquad \ldots(4),$$

wherein $\omega$ is the frequency **f** of the primary components (same as the drive frequency by definition, $\omega = 2\pi f$), and **C** is the capacitance of the resonance capacitor 24, both of which are known. The controller 50 of the present invention is capable to further calculate the resonance frequency **Fr** and the load resistance **R** (= $R_C$ + $R_L$) based upon Formula (4) with the phase θ calculated by Formula (2).

Similarly, another approach may be used for calculation of the resonance frequency **Fr** as discussed herein. As explained above, the load resistance **R** and impedance **Z** are replicated as follows:

$$Z = V_1 / I_1$$
$$Z = R + j \times (\omega L - 1 / \omega C) \qquad ...5).$$

By modifying Formula (5), the inductance L can be expressed as follows:

$$R = \mathrm{Re}(Z)$$
$$L = (\mathrm{Im}(Z) + 1 / \omega C) / \omega \qquad ...6).$$

Therefore, the controller 50 is capable to calculate the resonance frequency **Fr** with the inductance **L** calculated by Formula (6) and the known capacitance **C** of the resonance capacitor 24.

$$Fr = 1 / 2\pi \sqrt{LC} \qquad ...(7).$$

As will be discussed herein in detail, for each one of heating coils, upon calculation of the resonance frequency **Fr** (or inductance **L** of the heating coil 2) and the load resistance **R** from the primary components of the drive voltage **V** and the drive current **I,** the controller 50 of the present invention is capable to instantly determine the standing situation of the heated-subject **P** (including whether or not the pan **P** stands over the heating coil) as well as the material of the heated-subject **P**, and to control the electric power from the drive circuitries 14 (i.e., amount of heat generated in portions of the pan **P** over the corresponding heating coils) in accordance with a ratio of the load resistance **R** influenced by the pan **P** for each of the heating coils.

It should be noted that the controller 50 of the present invention is adapted to calculate the resonance frequency **Fr** (or inductance **L** of the heating coil 2) and the load resistance **R,** from the primary components of the high-frequency modulated drive voltage **V** and drive current **I** detected within a single "coil driving cycle" as shown in Fig. 2 (within about 33 microseconds at the drive frequency of 30 kHz), in a quite short time period.

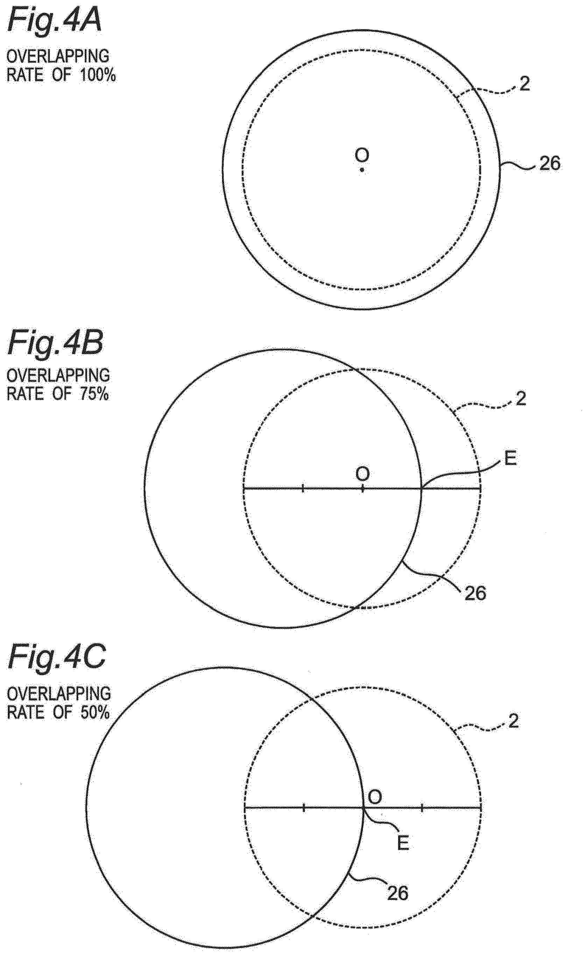

Here, detailed description will be made with some examples regarding how the controller 50 of the present invention determines the standing situation (standing area over the heating coil) of the pan **P** upon calculation of the resonance frequency **Fr** and the load resistance **R.** Figs. 4A, 4B, and 4C are top plan views of the heating coil 2 and a plurality of disks 26 set over the heating coil. Four disks 26 are prepared which are made of iron, magnetic stainless, non-magnetic stainless, and aluminum.

Each of the disks 26 is regarded as a pseudo-pan **P**. Diameters of the heating coil 2 and the disk 26 are about 180 mm and about 200 mm, respectively, and thickness of each disk 26 is about 1.5 mm. In Fig. 4A, the disk 26 is set over a center (denoted as center **O**) of the heating coil 2, of which standing situation is referred to as "overlapping rate of 100 %".

Also, in Figs. 4B and 4C, the disks 26 are set off the center so that the peripheral ends **E** thereof are positioned at 75 % and 50 % of the diameter of the heating coil 2, of which standing situations are referred to as "overlapping rate of 75 %" and "overlapping rate of 50 %", respectively. Thus, the standing situation with the overlapping rate of 50 % means the disk 26 having the peripheral end **E** of the disk 26 positioned on the center **O** of the heating coil 2.

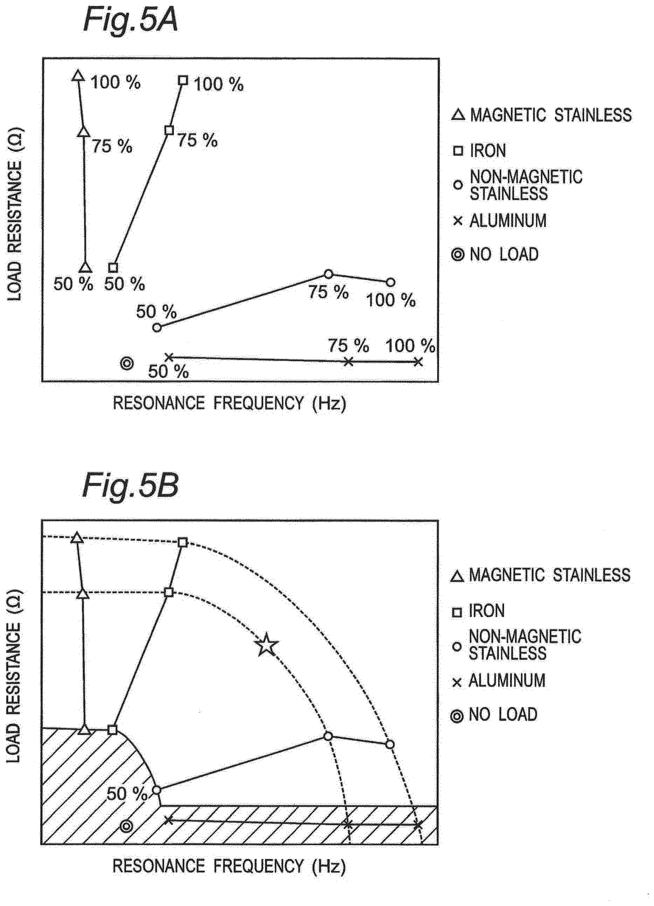

After each of the disks 26 made of iron, magnetic stainless, non-magnetic stainless, and aluminum has been set over the heating coil 2 so that the overlapping rate is 100 %, 75 %, and 50 % (corresponding to Figs. 4A, 4B, and 4C, respectively), the resonance frequency **Fr** and the load resistance **R are** calculated from the primary components of the drive voltage **V** and the drive current **I** as explained above, and plotted on a map (chart) as shown in Fig. 5A.

Also, when no disk is set over the heating coil 2 (thus, the standing situation with no load), the resonance frequency **Fr** and the load resistance **R** are calculated at a point marked by a double-circle in Figs. 5A and 5B.

In the present invention, for each of the disks 26 made of different materials, the plotted points (**Fr, R**) having the overlapping rates of 100 %, 75 % and 50 % may be lined continuously, so as to define a "drive suppression region" having the overlapping rate less than 50 % as shown by a hatching in Fig. 5B.

Therefore, when detecting the point of the resonance frequency **Fr** and the load resistance **R** falling within the predetermined drive suppression region having the overlapping rate less than 50 %, the controller 50 of the present invention is operable to control the drive circuitry 14 not to supply the electric power to the LCR induction-heater 20 since it determines that the pan **P** is insufficiently set over the heating coil 2 or merely a small object stands thereon. Apparently, the threshold of the overlapping rate for determining suppression of the electric power supply is not limited to 50 %, which may be less than 40 % or less than 60 %.

Also, while continuously connecting points showing the overlapping rates of 100 %, 75 % and 50 %, the overlapping rate of the disk 26 made of any material can be estimated based upon the resonance frequency **Fr** and the load resistance **R** as shown in Fig. 5B. For example, when the resonance frequency **Fr** and the load resistance **R** as plotted by a star sign in Fig. 5B, the controller 50 of the present invention determines that the pan **P** stands over the heating coil 55 at the overlapping rate of 75 % since the plotted point locates on the dashed line continuously connecting the overlapping rate of 75 %.

Furthermore, since the controller 50 of the present invention is adapted to promptly calculate the resonance frequency **Fr** and the load resistance **R** from the primary components of the high-frequency modulated drive voltage **V** and drive current **I** detected within a single cycle (within about 33 microseconds at the drive frequency of 30 kHz), so as to prevent heating the small object that is not to be heated.

This secures a safer system and save electric energy by eliminating the undesired energy consumption at no load of the heating coil. In other words, according to the present invention, calculation of the resonance frequency **Fr** and the load resistance **R** contributes quick determinations of the material and the standing situation of the pan **P** (i.e., how much area of the pan **P** is set over the heating coil 2) so as to facilitate heating the pan **P** under the optimal heating condition for the material and the standing situation of the pan **P.**

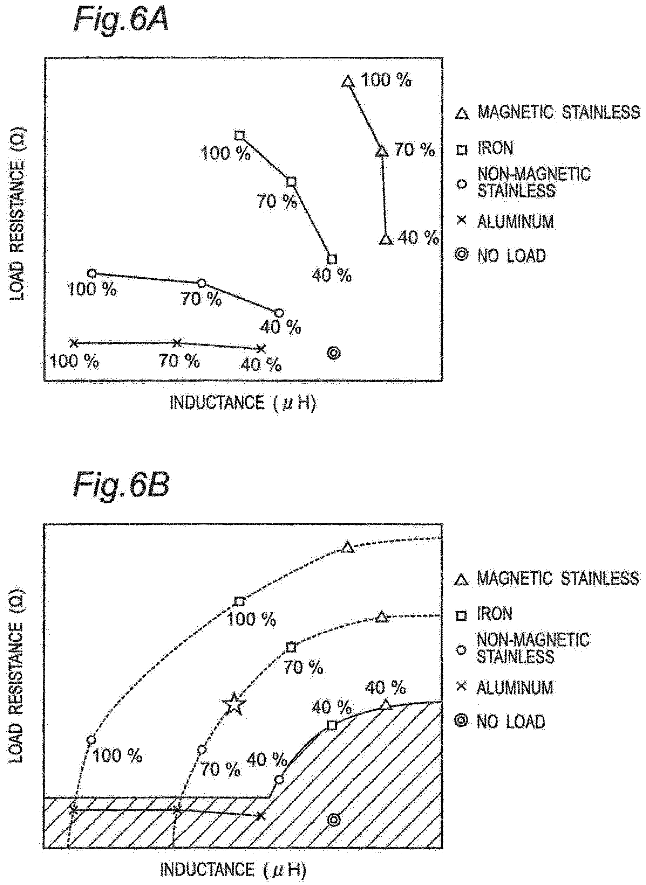

In the foregoing, the controller 50 is adapted to detect the resonance frequency **Fr** and the load resistance **R.** Alternatively, the controller 50 may be designed to calculate the inductance **L** of the heating coil 2 and the load resistance **R,** so as to control the drive circuitry 14. Figs. 6A and 6B are maps (charts) showing a relationship between the inductance **L** of the heating coil 2 and the load resistance **R** calculated from the primary components of the drive voltage **V** and the drive current **I,** which are similar to Figs. 5A and 5B.

When no disk is set (i.e., the standing situation with no load), the inductance **L** and the load resistance **R** are obtained at a point marked by a double-circle in Figs. 6A and 6B. The controller 50 is operable to control the drive circuitry 14 allowing the high-frequency current to the LCR induction-heater 20 only when the detected parameters of the inductance **L** and the load resistance **R** locate outside of the drive suppression region (as shown by a hatching in Fig. 6B). The threshold of the overlapping rate for determining suppression of the electric power supply is may be set as less than 40 %. Also, the drive suppression region may be defined not to heat the pan **P** made of aluminum.

Also, while continuously connecting points showing the overlapping rates of 100 %, 70 % and 40 % as shown in Fig. 6B, the overlapping rate of the disk 26 made of any material can be estimated based upon the inductance **L** and the load resistance **R.**

For example, when the inductance **L** and the load resistance **R** as plotted by a star sign in Fig. 6B, the controller 50 of the present invention determines that the pan **P** stand over the heating coil 55 at the overlapping rate of 70 % since the plotted point locates on the dashed line continuously connecting the overlapping rate of 70 %.

In general, it is well known that the pan **P** can be heated in the most efficient manner when the drive frequency is equal to the resonance frequency unique to the pan **P.** The controller 50 of the present invention finds the resonance frequency **Fr,** so as to choose the drive frequency same as the resonance frequency **Fr.**

Also, a drive frequency less than the resonance frequency **Fr** gives an adverse effect on the switching elements such as IGBTs, therefore, if the resonance frequency **Fr** was not exactly identified in the conventional art, the drive frequency has often been chosen much higher than the actual resonance frequency.

This makes a user enjoy only a limited heating capability of the induction-heating cooking system, since more current could otherwise be supplied than that of the lower or optimal drive frequency. However, according to the present invention, the controller can determine the resonance frequency **Fr** to select the optimal drive frequency based thereupon for desired heating power.

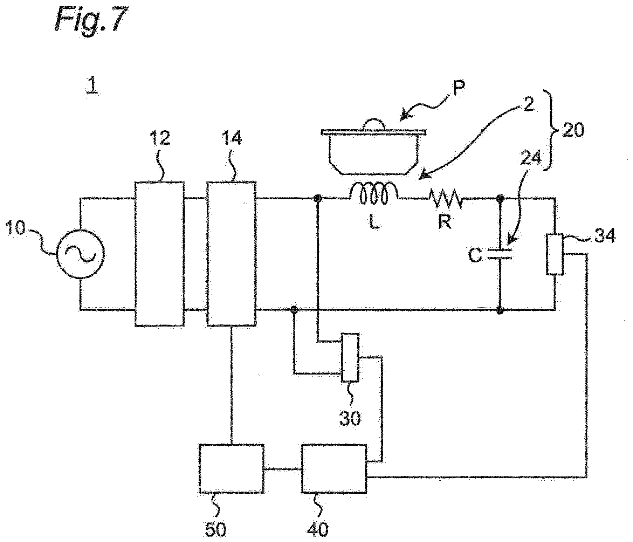

While a current transformer is used for the drive current detector 32 in the foregoing discussion, alternatively, a capacitor voltage detector 34 may be used for determining the drive current through the LCR induction-heater 20 by detecting capacitance voltage across the resonance capacitance 24. Fig. 7 is an alternative schematic circuit block diagram similar to Fig. 2.

As illustrated in Fig. 7, the induction-heating cooking system 1 includes the capacitor voltage detector 34 electrically connected with the primary-component extractor 40, for measuring a capacitance voltage $V_C$ across the resonance capacitance 24. Similar to the drive voltage **V,** the capacitance voltage $V_C$ contains higher order components of integral multiple of the drive frequency.

Thus, the primary-component extractor 40 is operable to extract the primary component (or first order component having the frequency same as the drive frequency) of the capacitance voltage $V_C$, by performing the discrete Fourier transformation with the sampled data of the capacitance voltage $V_C$, which also can be expressed by a complex notation.

There is a relationship between the primary component of the capacitance voltage $V_C$, and the drive current I, as follows:

$$V_{C1} = I_1 / J\omega C$$
$$I_1 = j\omega C V_{C1} \qquad \qquad ...(8),$$

wherein $\omega$ is frequency **f** of the primary components (same as the drive frequency by definition, $\omega = 2\pi f$), and **C** is capacitance of the resonance capacitor 24, which are known. As is apparently seen from Formula (8), the drive current $I_1$ has a phase advancing ahead that of the capacitance voltage $V_C$ by $\pi/2$, i.e., 90°. Thus, as the capacitance voltage $V_{C1}$ is expressed by a complex notation, the primary component of the drive current $I_1$ can be calculated quite easily, as follows:

$$V_{C1} = a + j \times b$$
$$I_1 = (-b + j \times a) \times \omega C \qquad \qquad ...(9).$$

Based upon the drive current $I_1$, the resonance frequency **Fr** (or the inductance **L** of the heating coil 2) and the load resistance **R** are calculated as discussed above so as to determine the pan material and the standing situation (including whether or not the pan **P** is set over the heating coil 2) as discussed in Embodiment 1. Also, since the relatively expensive current transformer can be replaced with the capacitor voltage detector 34 for detecting the drive current at more reasonable cost, the manufacturing cost of the induction-heating cooking systems can be reduced as discussed in Embodiment 1.

In the foregoing discussion, the primary-component extractor 40 is used to extract the primary components of the drive voltage **V** detected by the drive voltage detector 30 and the drive current **I** detected by the drive current detector 32, an n-th order component extractor may be used to extract n-th components of the drive voltage **V** and the drive current **I** by sampling data of the drive voltage **V** and the drive current **I** at a sampling frequency equal to k-times (k is natural number of 2 or more) of the drive frequency, and performing a discrete Fourier transformation with the sampled data of the drive voltage **V** and the drive current **I**, thereby calculating the resonance frequency **Fr** and the load resistance **R**.

In general, when induction-heating the heated-subject **P** of aluminum, it is required to supply to the heating coil, the high-frequency modulated current having frequency higher than as is required to induction-heating the heated-subject **P** of iron.

A so-called "all-metal" induction-heating cooking system that is adapted to heat pans of any metal having such high electronic conductivity and magnetic permeability like aluminum has been proposed (by, for example, Japanese Patent No. 3 460 997 B), and is now commercially available. The present invention can be incorporated into the "all-metal" induction-heating cooking system as well.

When heating the heated-subject **P** of aluminum with the drive current **I** of a frequency equal to n times of the drive frequency, it is often controlled such that the primary component of the drive current is reduced and the n-th order component of the drive current is increased. In case where the n-th order components (e.g. third components) of the drive current **I** and drive voltage **V** are greater than the primary component thereof, the n-th order component extractor may select the n-th order components for instant calculation of the resonance frequency **Fr** and the load resistance **R** in a similar manner as discussed above. In this example, this calculation with the n-th order components advantageously eliminates necessity to increase resolution of the A/D converter.

Although not illustrated in detail, a map (chart) can be obtained showing a relationship between the resonance frequency **Fr** and the load resistance **R** calculated from the n-th components of the drive voltage **V** and the drive current **I**, which is similar to Fig. 5A.

Yet, the load resistance of the aluminum disk is greater than that of Fig. 5A as the resonance frequency thereof is higher. Thus, the controller 50 is operable to calculate the resonance frequency **Fr** (or inductance **L**) and the load resistance **R** from the n-th order components of the drive voltage **V** and the drive current **I**.

Now referring to Fig. 8, the induction-heating cooking system 1 of Embodiment 1 will furthermore be described in detail hereinafter. The induction-heating cooking system 1 shown in Fig. 8 includes two of rectifying circuitries 12a, 12b adapted to rectify the alternate current of the commercial power source 10 into direct current, drive circuitries 14a, 14b adapted to supply high-frequency current of a given drive frequency to the inner and outer heating coils 2a, 2b, LCR induction-heaters 20a, 20b composed of heating coils 2a, 2b and resonance capacitors 24a, 24b connected in series each other.

Also the induction-heating cooking system 1 includes drive voltage detectors 30a, 30b adapted to detect drive voltage across the LCR induction-heater 20a, 20b, and drive current detectors 32a, 32b adapted to detect drive current through the LCR induction-heater 20a, 20b.

Furthermore it includes primary-component extractors 40a, 40b connected both with the drive voltage detectors 30a, 30b and the drive current detectors 32a, 32b, and a controller 50 connected both with the drive circuitries 14a, 14b and primary-component extractors 40a, 40b.

It should be noted that while the rectifying circuitries 12a, 12b of Fig. 8 are provided each for supplying direct current to the drive circuitries 14a, 14b, alternatively a single rectifying circuitry 12 may be shared to supply direct current to the drive circuitries 14a, 14b.

Each component shown in of Fig. 8, e.g., the rectifying circuitries 12a, 12b, the drive circuitries (first and second drive circuitries) 14a, 14b, the LCR induction-heaters 20a, 20b having the heating coils (inner and outer heating coils) 2a, 2b and resonance capacitors 24a, 24b connected in series with each other for cooperatively heating a single pan P, the drive voltage detectors 30a, 30b, the drive current detectors 32a, 32b, the primary-component extractors 40a, 40b, and the controller 50 are the same as those described with reference to Figs. 2 and 7, therefore, no duplicated description for those common components will be eliminated.

As the inner and outer heating coils 2a, 2b are adapted for cooperatively or simultaneously heating the single pan P, they are arranged physically close to each other. Thus, when the high-frequency current supplied to the heating coils have frequencies different from each other, an audible beating noise corresponding to the frequency difference may be generated, which makes a user quite uncomfortable.

Therefore, in order to prevent the undesired beating noise, the controller 50 needs to control the drive circuitries 14a, 14b to supply the high-frequency current of the same high-frequency both to the inner and outer heating coils 2a, 2b.

As described above, the controller 50 of the present invention shown in Fig. 8 can calculate the load resistance $R$, from the primary components of the high-frequency modulated drive voltage $V$ and drive current $I$ detected within the single "coil driving cycle" (within about 33 microseconds), in a quite short time period.

Also when performing the load detection of the inner and outer heating coils 2a, 2b, the primary components of the drive voltage $V$ and the drive current $I$ may be extracted for each of the heating coils simultaneously, or alternatively in sequence, i.e., one by one, thereby to minimize adverse mutual influence due to magnetic coupling between the heating coils 2a, 2b.

According to the induction-heating cooking system 1 of Embodiment 1, it is assumed that the load resistance $R$ is an index of a thermal capacity (i.e., heat quantity required for heating by a unit temperature) for the portion of the pan $P$ standing over the heating coils. Thus the controller 50 is adapted to control the drive circuitries 14a, 14b so that the greater electric energy $Q$ is supplied to the inner and outer heating coils 2a, 2b having the greater load resistance $R$, thereby heating the pan $P$ uniformly or evenly.

More particularly, the controller 50 is adapted to calculate energy allocation ratios $r_1$ and $r_2$ that can be expressed by the load resistance $R_1$ and $R_2$ of the inner and outer heating coils 2a, 2b as follows.

$$r_1 = R_1 / (R_1 + R_2)$$
$$r_2 = R_2 / (R_1 + R_2) \qquad \qquad ...(10).$$

Furthermore the controller 50 is adapted to allocate the total electric energy $Q_0$ corresponding to the user-selected "heat power" for the whole of the pan $P$, into partial electric energy $Q_1$, $Q_2$ to be supplied to each of the inner and outer heating coils 2a, 2b based upon the energy allocation ratios $r_1$ and $r_2$. Thus, the controller 50 calculates the partial electric energy $Q_1$, $Q_2$ for the inner and outer heating coils 2a, 2b as expressed below, and controls the drive circuitries 14a, 14b to supply the electric energy $Q_1$, $Q_2$ to the inner and outer heating coils 2a, 2b.

$$Q_1 = Q_0 \times r_1$$
$$Q_2 = Q_0 \times r_2 \qquad \qquad ...(11).$$

As the electric energy $Q$ can be calculated as an integral value of the electric power $W$ across a predetermined time period, the controller 50 may use any processes and devices to calculate the above electric energy $Q_1$, $Q_2$ for

controlling the drive circuitries 14a, 14b.

For example, in case where the inner and outer heating coils 2a, 2b are constantly supplied with a predetermined electric power $W_1$, $W_2$ (i.e., constant power driving), the controller 50 may control the drive circuitries 14a, 14b to supply electric power $W_1$, $W_2$ as expressed below with a parameter of a total electric power $W_0$ (= $dQ_0/dt$), to the inner and outer heating coils 2a, 2b.

$$W_1 = W_0 \times r_1$$
$$W_2 = W_0 \times r_2 \qquad\qquad ...(12).$$

Alternatively, in a case where the inner and outer heating coils 2a, 2b are intermittently supplied with the same electric power $W_0$ but time durations (periods $t_1$, $t_2$) for power supply are different from each other (i.e., duty driving), the controller 50 may control the drive circuitries 14a, 14b to supply the same electric power $W_0$ during the time duration $t_1$, $t_2$ as expressed below, to the inner and outer heating coils 2a, 2b. By definition, $Q_1 = W_0 \times t_1$, $Q_2 = W_0 \times t_2$, and $Q_0 = W_0 \times (t_1, + t_2)$) are assigned to Formula (11) to obtain the following formula:

$$Q_1 = W_0 \times (t_1 + t_2) \times r_1 \qquad \therefore t_1 = (t_1 + t_2) \times r_1$$
$$Q_2 = W_0 \times (t_1 + t_2) \times r_2 \qquad \therefore t_2 = (t_1 + t_2) \times r_2$$
$$\therefore t_1 / t_2 = R_1 / R_2 \qquad (\because \ Formula \ (11)) \qquad ...(13)$$

Thus, in order to achieve the desired electric energy $Q_1$, $Q_2$ to the inner and outer heating coils 2a, 2b, the controller 50 may use the electric power $W_1$, $W_2$ in Formula (12) in the constant power driving process, or may control the drive circuitries 14a, 14b in the duty driving process so that the ratio ($t_1/t_2$) of the time duration for supplying electric power to the inner and outer heating coils 2a, 2b is equal to the ratio ($R_1/R_2$) of the load resistance thereof.

Furthermore, the controller 50 may combine the constant power driving process and the duty driving process to control the drive circuitries 14a, 14b to achieve the electric energy $Q_1$, $Q_2$ obtained by Formula (11), thereby to heat the whole pan **P** evenly.

Therefore, the controller 50 of the present invention may calculate the load resistance $R_1$ and $R_2$ and the energy allocation ratios $r_1$ and $r_2$ to allocate the whole electric energy $Q_0$ into the appropriate electric energy $Q_1$, $Q_2$ for the inner and outer heating coils 2a, 2b, thereby heating the pan **P** in an even or uniform manner.

Although the forgoing electric energy $Q_1$, $Q_2$ are calculated by Formula (13) assuming as depending linearly upon the energy allocation ratios $r_1$ and $r_2$, the electric energy $Q_1$, $Q_2$ may non-linearly be varied with or weighed on the energy allocation ratios $r_1$ and $r_2$. The weighed electric energy may be determined when designing each of the products of the induction-heating cooking system 1 based upon the actual measurement of the relationship between the load resistance and the desired heating energy.

Modification 1.

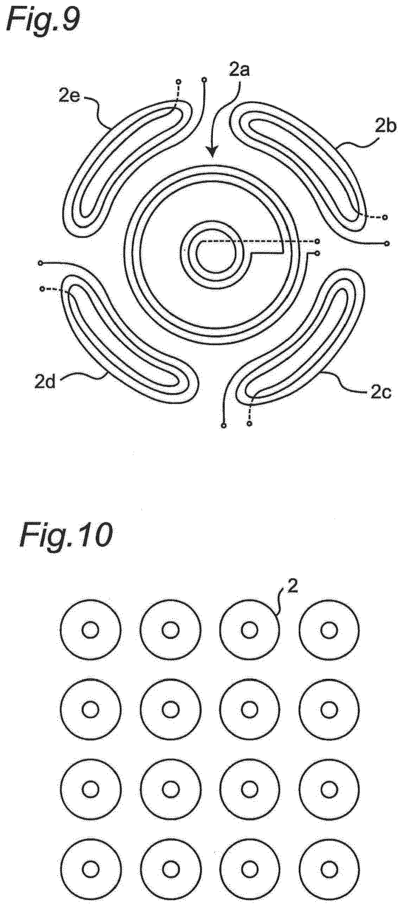

While the induction-heating cooking system 1 of Embodiment 1 includes the inner heating coil 2a and the outer heating coil 2b formed concentrically around the central coil 2a as illustrated in Fig. 1, it may include a single central coil 2a and four of peripheral coils 2b to 2e formed in a shape of a quarter circle arc (like a banana or cucumber) as illustrated in Fig. 9. Alternatively, the induction-heating cooking system 1 may include a plurality of circular sub heating coils 2 arranged in a matrix, as illustrated in Fig. 10.

In those cases, a plurality of driving circuitries 14 and primary-component extractors 40 (or n-th order component extractors) may be provided so that the controller 50 calculates the load resistance **R** of each of the heating coils 2 and controls the electric energy **Q** to be supplied thereto in accordance with the energy allocation ratios so as to heat the whole of the pan **P** evenly.

Also, even where a user moves the position of the pan **P**, e.g., by tossing the ingredients in the pan **P**, the controller 50 of the present invention may repeatedly update the load resistance **R** of each of the heating coils 2 so as to maintain the appropriate electric energy for each of the heating coils, thereby achieving uniform heating across the pan **P**.

By the way, each of the heating coils 2 generally has the maximum electric energy to be supplied by the high-frequency current per second, that is, the maximum rated electric power $W_{MAX}$. When each of the heating coils 2 is driven under the same driving conditions (i.e., the same duty ratio or time duration of the high-frequency current), one of the heating coils 2 to be supplied with power may have the load resistance **R** greater than the other.

Then, for example, the electric power $W_1$ supplied to the central heating coil 2a for the desired electric energy **Q** which is calculated based upon the energy allocation ratios $r_1$ and $r_2$ (Q = W x t) may be greater than the maximum rated electric power $W_{MAX}$.

Thus as above, the electric energy **Q** may be calculated as an integral value of the electric power **W** across a predetermined time period, when the time duration for supplying the electric power to each of the heating coils 2 is set as the same and the electric energy **Q** to each of them is allocated based upon the energy allocation ratios $r_1$ and $r_2$, a particular heating coil 2 may have the electric power **W** exceeding the maximum rated electric power $W_{MAX}$, which may in turn deteriorates the reliability of the induction-heating cooking system 1.

Therefore, according to Modification 1, the controller 50 gives higher priority to achieving reliable heating than sufficient heating energy while securing to heat evenly across the pan **P**, by limiting the total electric energy to $Q_0'$ of all of the heating coils 2, otherwise the electric power **W** calculated for obtaining the desired electric energy $Q_1$, $Q_2$ by Formula (11) would be greater than the maximum rated electric power $W_{MAX}$.

This provides the induction-heating cooking system 1 which heats the whole of the pan **P** in an even or uniform manner while keeping the electric power **W** supplied to each of the heating coils less than the maximum rated electric power $W_{MAX}$, thereby to enhance the reliability thereof.

Furthermore, in the forgoing description, the purpose to calculate the load resistance **R** and the energy allocation ratios r and to control the electric power for each of the heating coils 2 is to evenly heat the pan **P,** but it is not limited thereto.

Thus, for example, if it may be desired to heat the pan **P** in an uneven manner, e.g., more sufficiently for a peripheral portion than a central portion of the pan **P**, the controller 50 may calculated the load resistance **R** and control the drive circuitries 14a, 14b to supply the weighed electric energy $Q_1'$, $Q_2'$ to the heating coils 2.

Embodiment 2.

Next, Embodiment 2 of the induction-heating cooking system according to the present invention will be described herein. In order to appropriately allocate the electric energy each to the heating coils 2, in Embodiment 2 the controller 50 of calculates the energy allocation ratios **r** based upon the overlapping rate (the standing area over the heating coil 2) of the pan **P,** while in Embodiment 1, based upon the load resistance **R** of each of the heating coils 2. Since the other features of Embodiment 2 are similar to those of Embodiment 1, no duplicated description in detail for the common features will be made herein.

As described with reference in Fig. 8, the controller 50 of the present invention can instantly calculate either pair of the resonance frequency **Fr** and the load resistance **R**, or the inductance **L** and the load resistance **R** of the inner and outer heating coils 2a, 2b, from the primary components of the high-frequency modulated drive voltage **V** and drive current **I** detected within the single coil driving cycle.

Also, referring to the maps shown in Figs. 5 and 6 and prestored in the memory (not shown), the controller 50 of the present invention can easily determine the overlapping rate of the pan **P** standing over the heating coils 2a, 2b upon referring the plotted point (e.g., the star sign) of the resonance frequency **Fr** and the load resistance **R** on the map of Fig. 5B or the inductance **L** and the load resistance **R** on the map of Fig. 6B.

The area where the pan **P** over the heating coils 2a, 2b is effectively heated is fixed while depending upon the size and shape of the heating coils 2, thus once the overlapping rate of the pan **P** determined, the standing area $S_1$, $S_2$ of the pan **P** over the heating coils 2a, 2b can be calculated.

According to the induction-heating cooking system 1 of Embodiment 2, it is assumed that the standing area **S** of the pan **P** is an index of a thermal capacity for the portion of the pan **P** standing over the heating coils 2a, 2b. Thus the controller 50 is adapted to control the drive circuitries 14a, 14b so that the greater electric energy **Q** is supplied to the inner and outer heating coils 2a, 2b having the standing area **S,** thereby heating the pan **P** uniformly or evenly.

More particularly, the controller 50 is adapted to calculate energy allocation ratios $r_1$ and $r_2$ that can be expressed by the standing area $S_1$ and $S_2$ of the inner and outer heating coils 2a, 2b as follows.

$$r_1 = S_1 / (S_1 + S_2)$$
$$r_2 = S_2 / (S_1 + S_2) \qquad \dots(14).$$

Furthermore the controller 50 is adapted to allocate the total electric energy $Q_0$ corresponding to the user-selected "heat power" for the whole of the pan **P,** into partial electric energy $Q_1$, $Q_2$ to be supplied to each of the inner and outer heating coils 2a, 2b based upon the energy allocation ratios $r_1$ and $r_2$.

Thus, the controller 50 calculates the partial electric energy $Q_1$, $Q_2$ for the inner and outer heating coils 2a, 2b as expressed below, and controls the drive circuitries 14a, 14b to supply the electric energy $Q_1$, $Q_2$ to the inner and outer heating coils 2a, 2b.

$$Q_1 = Q_0 \times r_1$$
$$Q_2 = Q_0 \times r_2$$

$$\ldots(15).$$

It should be noted that the standing area $S_1$, $S_2$ of the pan **P** over the heating coils 2a, 2b may be determined by referring to the maps shown in Figs. 5B and 6B upon consideration of the factors of not only the load resistance **R** but also the resonance frequency **Fr** and the load resistance **R** of the heating coils 2a, 2b which may substantially varied in accordance with material composing the pan **P.**

Thus, the controller 50 of this embodiment can allocate even more appropriate electric energy to each of the heating coils 2a, 2b than that of Embodiment 1, thereby enhance even or uniform heating across the pan **P.**

Similar to Embodiment 1, in order to achieve the electric energy $Q_1$, $Q_2$ expressed above, the controller 50 may control the electric power $W_1$, $W_2$ to the heating coils 2a, 2b in the constant power driving process, or alternatively may control the time duration $t_1$, $t_2$ for power supply in the duty driving process.

Furthermore, the above-mentioned electric energy $Q_1$, $Q_2$ may be calculated as depending linearly upon the energy allocation ratios $r_1$ and $r_2$, or may be weighed non-linearly be varied with or weighed thereupon. Also similar to Embodiment 1, the weighed electric energy may be determined when designing each of products of the induction-heating cooking system 1 based upon the actual measurement of the relationship between the load resistance and the desired heating energy.

**Claims**

1. An induction-heating cooking system, comprising:

   - a first heating coil (2a);
   - at least one second heating coil (2b) arranged close to the first heating coil (2a) for heating a single heated-subject (P) in cooperation with each other;
   - first and second drive circuitries (14a, 14b) supplying high-frequency current of the same frequency individually to the first and second heating coils (2a, 2b);

   **characterized by** further comprising:

   - a first n-th order component extractor, with n being a natural number, extracting an n-th order drive current component of the drive current through the first heating coil (2a) and an n-th order drive voltage component of the drive voltage across the first heating coil (2a);
   - a second n-th order component extractor, with n being a natural number, extracting an n-th order drive current component of the drive current through the second heating coil (2b) and an n-th order drive voltage component of the drive voltage across the second heating coil (2b); and
   - a controller (50) is adapted to calculate load resistance of the first and second heating coils based upon the n-th order drive current components and the n-th order drive voltage components extracted by the first and second n-th order component extractors,

   wherein the controller (50) is adapted to control electric energy supplied from the first and second drive circuitries (14a, 14b) to the first and second heating coils (2a, 2b) in accordance with energy allocation ratios which depend upon the calculated load resistance ratio of the first and second heating coils (2a, 2b).

2. The induction-heating cooking system according to claim 1,
   wherein the controller is adapted to:

   a) calculate a resonance frequency or an inductance of the first and second heating coils (2a, 2b) based upon the n-th order drive current components and the n-th order drive voltage components extracted by the first and second n-th order component extractors,
   b) determine first and second standing areas of the heated-subject (P) standing over the first and second heating coils (2a, 2b) by means of a map showing a relationship between the calculated resonance frequency and the calculated load resistance of the first and second heating coils (2a, 2b), or between the calculated inductance and the calculated load resistance of the first and second heating coils (2a, 2b), and

c) control electric energy supplied to the first and second heating coils (2a, 2b) in accordance with energy allocation ratios which depend upon the calculated first and second standing areas of the first and second heating coils (2a, 2b).

3. The induction-heating cooking system according to claim 1 or 2,
wherein a plurality of the second heating coils (2b - 2e) are formed concentrically around the first heating coil (2a), or formed in a shape of a circle arc or a circle.

4. A process for controlling an induction-heating cooking system,
the induction-heating cooking system comprising a first heating coil (2a), at least one second heating coil (2b) arranged close to the first heating coil (2a) for heating a single heated-subject (P) in cooperation with each other, the process including:

- supplying high-frequency current of the same frequency individually to the first and second heating coils (2a, 2b);

**characterized by**:

- extracting an n-th order drive current component, with n being a natural number, of the drive current through the first heating coil (2a) and an n-th order drive voltage component of the drive voltage across the first heating coil (2a);
- extracting an n-th order drive current component, with n being a natural number, of the drive current through the second heating coil (2b) and an n-th order drive voltage component of the drive voltage across the second heating coil (2b);
- calculating a load resistance of the first and second heating coils (2a, 2b) based upon the n-th order drive current components and the n-th order drive voltage components; and
- controlling electric energy supplied from the first and second drive circuitries (14a, 14b) to the first and second heating coils (2a, 2b) in accordance with energy allocation ratios which depend upon the calculated load resistance ratio of the first and second heating coils (2a, 2b).

5. The process according to claim 4,
wherein the step of controlling has sub-steps including:

a) calculating a resonance frequency or an inductance of the first and second heating coils (2a, 2b) based upon the n-th order drive current components and the n-th order drive voltage components extracted by the first and second n-th order component extractors (40),
b) determining first and second standing areas of the heated-subject (P) standing over the first and second heating coils (2a, 2b) by means of a map showing a relationship between the calculated resonance frequency and the calculated load resistance of the first and second heating coils (2a, 2b), or between the calculated resonance frequency and the calculated inductance of the first and second heating coils (2a, 2b), and
c) controlling electric energy supplied to the first and second heating coils (2a, 2b) in accordance with energy allocation ratios which depend upon the calculated first and second standing areas of the first and second heating coils (2a, 2b).

**Patentansprüche**

1. Induktionsheizungs-Kochsystem, das Folgendes aufweist:

- eine erste Heizspule (2a);
- mindestens eine zweite Heizspule (2b), die nahe bei der ersten Heizspule (2a) angeordnet ist, zum Beheizen eines einzelnen Heizobjektes (P) im Zusammenwirken miteinander;
- erste und zweite Betriebsschaltungsanordnungen (14a, 14b), die einen hochfrequenten Strom mit der gleichen Frequenz individuell der ersten und der zweiten Heizspule (2a, 2b) zuführen;

**dadurch gekennzeichnet,**

**dass** das Induktionsheizungs-Kochsystem ferner Folgendes aufweist:

- ein Komponenten-Extrahierer n-ter Ordnung, wobei n eine natürliche Zahl ist, der eine Betriebsstromkomponente n-ter Ordnung von dem Betriebsstrom durch die erste Heizspule (2a) extrahiert und eine Betriebsspannungskomponente n-ter Ordnung von der Betriebsspannung über der ersten Heizspule (2a) extrahiert;
- einen zweiten Komponenten-Extrahierer n-ter Ordnung, wobei n eine natürliche Zahl ist, der eine Betriebskomponente n-ter Ordnung von dem Betriebsstrom durch die zweite Heizspule (2b) extrahiert und eine Betriebsspannungskomponente n-ter Ordnung von der Betriebsspannung über der Heizspule (2b) extrahiert; und
- eine Steuerung (50), die dazu ausgebildet ist, den Lastwiderstand der ersten und der zweiten Heizspule zu berechnen, und zwar basierend auf den Betriebsstromkomponenten n-ter Ordnung und den Betriebsspannungskomponenten n-ter Ordnung, die von den ersten und zweiten Komponenten-Extrahierern n-ter Ordnung extrahiert worden sind,

wobei die Steuerung (50) dazu ausgebildet ist, die elektrische Energie zu steuern, die von der ersten und der zweiten Betriebsschaltungsanordnung (14a, 14b) der ersten und der zweiten Heizspule (2a, 2b) zugeführt wird, und zwar gemäß Energieaufteilungsverhältnissen, die von dem berechneten Lastwiderstandverhältnis von der ersten und der zweiten Heizspule (2a, 2b) abhängen.

2. Induktionsheizungs-Kochsystem gemäß Anspruch 1,
wobei die Steuerung dazu ausgebildet ist:

a) eine Resonanzfrequenz oder eine Induktivität von der ersten und der zweiten Heizspule (2a, 2b) zu berechnen, und zwar basierend auf den Betriebsstromkomponenten n-ter Ordnung und den Betriebsspannungskomponenten n-ter Ordnung, die von den ersten und zweiten Komponenten-Extrahierern n-ter Ordnung extrahiert worden sind,
b) einen ersten und einen zweiten Standbereich des Heizobjekts (P) zu bestimmen, welches über der ersten und der zweiten Heizspule (2a, 2b) steht, und zwar mittels einer Abbildung, welche den Zusammenhang zwischen der berechneten Resonanzfrequenz und dem berechneten Lastwiderstand von der ersten und der zweiten Heizspule (2a, 2b) angibt, oder die den Zusammenhang zwischen der berechneten Induktivität und dem berechneten Lastwiderstand von der ersten und der zweiten Heizspule (2a, 2b) angibt, und
c) die elektrische Energie zu steuern, die der ersten und der zweiten Heizspule (2a, 2b) zugeführt wird, und zwar in Abhängigkeit von den Energieaufteilungsverhältnissen, die von den berechneten ersten und zweiten Standbereichen der ersten und der zweiten Heizspule (2a, 2b) abhängen.

3. Induktionsheizungs-Kochsystem gemäß Anspruch 1 oder 2,
wobei eine Vielzahl von den zweiten Heizspulen (2b - 2e) konzentrisch um die erste Heizspule (2a) ausgebildet sind oder in der Form eines Kreisbogens oder eines Kreises ausgebildet sind.

4. Verfahren zum Steuern eines Induktionsheizungs-Kochsystems, wobei das Induktionsheizungs-Kochsystem eine erste Heizspule (2a), mindestens eine zweite Heizspule (2b), die nahe bei der ersten Heizspule (2a) angeordnet ist, zum Beheizen eines einzelnen Heizobjekts (P) im Zusammenwirken miteinander aufweist,
wobei das Verfahren folgenden Schritt aufweist:

- Zuführen eines hochfrequenten Stroms mit der gleichen Frequenz individuell zu der ersten und zweiten Heizspule (2a, 2b);

**gekennzeichnet durch** folgende Schritte:

- Extrahieren einer Betriebsstromkomponente n-ter Ordnung von einem Betriebsstrom, der durch die erste Heizspule (2a) fließt, wobei n eine natürliche Zahl ist, und Extrahieren einer Betriebsspannungskomponente n-ter Ordnung von der Betriebsspannung über der ersten Heizspule (2a);
- Extrahieren einer Betriebsstromkomponente n-ter Ordnung von dem Betriebsstrom, der durch die zweite Heizspule (2b) fließt, wobei n eine natürliche Zahl ist, und Extrahieren einer Betriebsspannungskomponente n-ter Ordnung von der Betriebsspannung über der zweiten Heizspule (2b);
- Berechnen eines Lastwiderstands von der ersten und der zweiten Heizspule (2a, 2b), und zwar basierend auf den Betriebsstromkomponenten n-ter Ordnung und den Betriebsspannungskomponenten n-ter Ordnung; und
- Steuern der elektrischen Energie, die von den ersten und zweiten Betriebsschaltungsanordnungen (14a, 14b) der ersten und der zweiten Heizspule (2a, 2b) zugeführt wird, und zwar in Abhängigkeit von den Energieaufteilungsverhältnissen, die von den berechneten Lastwiderstandsverhältnissen der ersten und der zweiten Heizspule (2a, 2b) abhängen.

**5.** Verfahren gemäß Anspruch 4,
wobei der Verfahrensschritt zum Steuern folgende Teilschritte aufweist:

a) Berechnen einer Resonanzfrequenz oder einer Induktivität von der ersten und der zweiten Heizspule (2a, 2b), und zwar basierend auf den Betriebsstromkomponenten n-ter Ordnung und den Betriebsspannungskomponenten n-ter Ordnung, die von den Komponenten-Extrahierern (40) n-ter Ordnung extrahiert worden sind,
b) Bestimmen von ersten und zweiten Standbereichen von dem Heizobjekt (P), das über der ersten und der zweiten Heizspule (2a, 2b) steht, und zwar mittels einer Abbildung, die einen Zusammenhang zwischen der berechneten Resonanzfrequenz und dem berechneten Lastwiderstand von der ersten und der zweiten Heizspule (2a, 2b) angibt, oder einen Zusammenhang zwischen der berechneten Resonanzfrequenz und der berechneten Induktivität von der ersten und der zweiten Heizspule (2a, 2b) angibt, und
c) Steuern der elektrischen Energie, die der ersten und der zweiten Heizspule (2a, 2b) zugeführt wird, und zwar in Abhängigkeit von den Energieaufteilungsverhältnissen, die von den berechneten ersten und zweiten Standbereichen der ersten und der zweiten Heizspule (2a, 2b) abhängen.

**Revendications**

**1.** Système de cuisson à chauffage par induction, comprenant :

- un premier bobinage de chauffage (2a) ;
- au moins un second bobinage de chauffage (2b) agencé proche du premier bobinage de chauffage (2a) pour chauffer un sujet à chauffer unique (P) en coopération l'un avec l'autre ;
- un premier et un second circuit pilote (14a, 14b) qui alimentent un courant à haute fréquence ayant la même fréquence individuellement au premier et au second bobinage de chauffage (2a, 2b) ;

**caractérisé en ce qu'**il comprend en outre :

- un premier extracteur de composante de n-ième ordre, n étant un nombre naturel, qui extrait une composante de courant pilote de n-ième ordre du courant pilote à travers le premier bobinage de chauffage (2a) et une composante de voltage pilote de n-ième ordre du voltage pilote à travers le premier bobinage de chauffage (2a) ;
- un second extracteur de composante de n-ième ordre, n étant un nombre naturel, qui extrait une composante de courant pilote de n-ième ordre du courant pilote à travers le second bobinage de chauffage (2b) et une composante de voltage pilote de n-ième ordre du voltage pilote à travers le second bobinage de chauffage (2b) ; et
- un contrôleur (50) qui est adapté à calculer une résistance de charge du premier et du second bobinage de chauffage sur la base des composantes de courant pilote de n-ième ordre et des composantes de voltage pilote de n-ième ordre extraites par le premier et le second extracteur de composantes de n-ième ordre,

dans lequel le contrôleur (50) est adapté à commander l'énergie électrique alimentée depuis le premier et le second circuit pilote (14a, 14b) au premier et au second bobinage de chauffage (2a, 2b) en accord avec des rapports d'attribution d'énergie qui dépendent du rapport calculé des résistances de charge du premier et du second bobinage de chauffage (2a, 2b).

**2.** Système de cuisson à chauffage par induction selon la revendication 1, dans lequel le contrôleur est adapté à :

a) calculer une fréquence de résonance ou une inductance du premier et du second bobinage de chauffage (2a, 2b) sur la base des composantes de courant pilote de n-ième ordre et des composantes de voltage pilote de n-ième ordre extraites par le premier et le second extracteur de composantes de n-ième ordre,
b) déterminer une première et une seconde zone stationnaire du sujet à chauffer (P) qui se trouvent au-dessus du premier et du second bobinage de chauffage (2a, 2b) au moyen d'une carte présentant une relation entre la fréquence de résonance calculée et la résistance de charge calculée du premier et du second bobinage de chauffage (2a, 2b), ou entre l'inductance calculée et la résistance de charge calculée du premier et du second bobinage de chauffage (2a, 2b), et
c) commander l'énergie électrique alimentée au premier et au second bobinage de chauffage (2a, 2b) en accord avec des rapports d'attribution d'énergie qui dépendent de la première et de la seconde zone stationnaire calculées du premier et du second bobinage de chauffage (2a, 2b).

**3.** Système de cuisson à chauffage par induction selon la revendication 1 ou 2, dans lequel une pluralité de seconds bobinages de chauffage (2b-2e) sont formés concentriquement autour du premier bobinage de chauffage (2a), ou formés sous la forme d'un arc de cercle ou d'un cercle.

**4.** Procédé pour commander un système de cuisson à chauffage par induction, le système de cuisson à chauffage par induction comprenant un premier bobinage de chauffage (2a), au moins un second bobinage de chauffage (2b) agencé proche du premier bobinage de chauffage (2a) pour chauffer un sujet unique à chauffer (P) en coopération l'un avec l'autre, le procédé incluant :

- l'alimentation d'un courant à haute fréquence ayant la même fréquence, individuellement au premier et au second bobinage de chauffage (2a, 2b) ;

**caractérisé par** les étapes consistant à :

- extraire une composante de courant pilote de n-ième ordre, n étant un nombre naturel, du courant pilote à travers le premier bobinage de chauffage (2a), et une composante de voltage pilote de n-ième ordre du voltage pilote à travers le premier bobinage de chauffage (2a) ;
- extraire une composante de courant pilote de n-ième ordre, n étant un nombre naturel, du courant pilote à travers le second bobinage de chauffage (2b), et une composante de voltage pilote de n-ième ordre du voltage pilote à travers le second bobinage de chauffage (2b) ;
- calculer une résistance de charge du premier et du second bobinage de chauffage (2a, 2b) sur la base des composantes de courant pilote de n-ième ordre et des composantes de voltage pilotent de n-ième ordre ; et
- commander l'énergie électrique alimentée depuis le premier et le second circuit pilote (14a, 14b) vers le premier et le second bobinage de chauffage (2a, 2b) en accord avec des rapports d'attribution d'énergie qui dépendent du rapport calculé des résistances de charge du premier et du second bobinage de chauffage (2a, 2b).

**5.** Procédé selon la revendication 4,
dans lequel l'étape consistant à commander comporte des sous-étapes incluant :

a) le calcul d'une fréquence de résonance ou d'une inductance du premier et du second bobinage de chauffage (2a, 2b) basé sur les composantes de courant pilote de n-ième ordre et sur les composantes de voltage pilote de n-ième ordre extraites par le premier et le second extracteur de composante de n-ième ordre (40),
b) déterminer une première et une seconde zone stationnaire du sujet à chauffer (P) qui se trouve au-dessus du premier et du second bobinage de chauffage (2a, 2b) au moyen d'une carte présentant une relation entre la fréquence de résonance calculée et la résistance de charge calculé du premier et du second bobinage de chauffage (2a, 2b), ou entre la fréquence de résonance calculée et l'inductance calculée du premier et du second bobinage de chauffage (2a, 2b), et
c) commander l'énergie électrique alimentée au premier et au second bobinage de chauffage (2a, 2b) en accord avec les rapports d'attribution d'énergie qui dépendent de la première et de la seconde zone stationnaire calculées du premier et du second bobinage de chauffage (2a, 2b).

Fig.1

## Fig.2

## Fig.3

I : DRIVE CURRENT
WAVEFORM

V : DRIVE VOLTAGE
WAVEFORM

1 COIL DRIVING CYCLE

*Fig.4A*

OVERLAPPING
RATE OF 100%

*Fig.4B*

OVERLAPPING
RATE OF 75%

*Fig.4C*

OVERLAPPING
RATE OF 50%

## Fig.5A

LOAD RESISTANCE (Ω)

RESONANCE FREQUENCY (Hz)

△ MAGNETIC STAINLESS
□ IRON
○ NON-MAGNETIC STAINLESS
× ALUMINUM
◎ NO LOAD

## Fig.5B

LOAD RESISTANCE (Ω)

RESONANCE FREQUENCY (Hz)

△ MAGNETIC STAINLESS
□ IRON
○ NON-MAGNETIC STAINLESS
× ALUMINUM
◎ NO LOAD

20

## Fig.6A

## Fig.6B

Fig.7

Fig.8

*Fig.9*

*Fig.10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009238575 A
- JP 2009238613 A
- US 20100282740 A
- JP 3460997 B